# EUROPEAN PATENT SPECIFICATION

(11) **EP 2 540 501 B1**
(45) Date of publication and mention of the grant of the patent: **01.04.2015**
(21) Application number: 11008487.8
(22) Date of filing: 22.10.2011
(51) Int. Cl.: B32B 37/12, B05C 1/08, E04D 5/14, D06N 5/00

(54) **Method of producing weldable roof felt sections having an adhesive layer on one side in the form of at least one longitudinal strip and a transversal strip of an adhesive material and a device for implementation of this method**
Verfahren zur Herstellung von schweißbaren Dachpappenabschnitten mit einer Klebeschicht auf einer Seite in Form von mindestens einem länglichen Streifen und einem quer verlaufenden Streifen eines Klebematerials sowie eine Vorrichtung zur Implementierung des Verfahrens
Procédé pour la production de sections de feutre de toiture pouvant être soudées ayant une couche adhésive d'un côté sous forme d'au moins une bande longitudinale et une bande transversale de matériau adhésif et dispositif pour la mise en oeuvre de ce procédé

(30) Priority: 30.06.2011 PL 39548111
(43) Date of publication of application: 02.01.2013
(73) Proprietor: Werner Janikowo Sp. z o.o., 66-400 Gorzów Wielkopolski (PL)
(72) Inventor: Wisniewski, Tomasz, 95-054 Ksawerów (PL)
(74) Representative: Klassek, Maciej Adam

(56) References cited:
- US-A1- 2001 051 252
- US-A1- 2005 130 519

## Description

The present invention refers to the method of producing sections of weldable roof felt having an adhesive layer on one side in the form of at least one longitudinal strip and a transversal strip of an adhesive material and a device for implementation of this method.

There are known roof felts in the form of a base layer such as for example a glass blanket or fabric or polyester fiber fabric, saturated and covered with bituminous mass on both sides. Such roof felts are produced by applying bituminous masses onto the unreeled roll of the base by passing a base strip through the tank with hot liquid bituminous mass, said strip passed on the rolls, and then pulling the saturated strip covered with bituminous mass through the calibration slot in order to achieve the planned thickness, applying the materials for the finishing of top and bottom felt surfaces and cutting off the planned length and reeling the resultant felt section. In this case the bituminous mass on the top and bottom surface of the base is the same. The felt surface is usually finished with mineral grit of different grain size. Aforesaid known method is used for production of roof felt with smooth bottom surface. Such roof felts with smooth bottom surface are used exclusively as a water proof layer of the roofing.

Yet, in the process of roofing application using roof felt, due to moisture present in roof layers, it is often the case that in addition to necessary water proof protection it is also required to provide ventilation of the roof surface. In this case roof felts with developed bottom surface are used, having longitudinal narrow convex strips of bituminous mass or a pattern in the form of a convex labyrinth of bituminous mass strips. To facilitate connection of neighboring felt sheets, this felt is provided with a longitudinal adhesive edge strip of bituminous mass on the bottom, tangential to one of the longitudinal edges of felt strip. Felts of such a design are known from the French patent application FR2680532 and European patent EP1283929.

Felts with a developed bottom surface with a layer of bituminous mass in the form of convex narrow longitudinal strips or their labyrinth-like pattern with a wide smooth edge strip are produced in such a way that the strip of base covered and/or saturated on both sides is coated from the bottom with a layer of adhesive bituminous mass using a rotary roller partially immersed in liquid bituminous mass, having on its external surface a negative pattern of longitudinal strips or a labyrinth pattern, and having on one side a wide smooth ring-shaped surface section tangential to the edge of the side surface. The printing roller is positioned underneath the roof felt so that the top surface of the roller is in contact with the bottom surface of the roof felt. The bottom part of the printing roller immersed in the tank with liquid bituminous mass transfers bituminous mass from the tank to the bottom surface of the roof felt during the rotation thus forming a convex imprint.

After application of bituminous mass patterns, the bottom surface of the roof felt is covered with protective plastic foil, and the top surface of the roof felt is coated with mineral grit and then the planned length of the roof felt strip is cut off and reeled.

Bituminous mass covering the base may be different on the top and on the bottom side of the base insert. Bituminous mass used for the pattern in the form of strips or a labyrinth with a wide smooth strip along one edge can be the same as bituminous mass covering the insert or different.

There is also known the weldable felt provided on its bottom side with a system of strips of adhesive bituminous mass, produced in the form of a reeled sheet, having an adhesive bituminous mass strip put from the top on the external surface. This strip, used for front lap connection with neighboring felt sheets is produced by preheating the crosswise edge of felt sheet and mechanical removal (with a scraper) of a mineral grit layer and appropriate disclosure of the adhesive bituminous layer from underneath the grit.

The EC utility model RCD 000769443-0008 discloses the view of the felt sheet having on one side an adhesive layer in the form of longitudinal parallel strips and a wider parallel edge strip connected with a perpendicular crosswise end strip. The felt presented in this model makes it possible to produce roofings in a comfortable, simple and quick manner by lap connection of consecutive felt sheets using a wider longitudinal strip for longitudinal laps and a crosswise strip of adhesive bituminous mass for crosswise laps.

Furthermore, there is known a printing method from the offset technique used in printing industry which consists in the printing of patterns on a flat surface using a roller, on the lateral surface of which (covered with paint) there is a convex map of the imprint.

Document US 2001/0051252 A1 discloses a method and an apparatus for producing roof felts with an adhesive layer applied by means of a roller.

The present invention refers to the method of producing weldable roof felt sections having an adhesive layer on one side in the form of at least one longitudinal strip and a transversal strip of an adhesive material.

In the method according to the invention a layer of adhesive mass is applied to the bottom surface of the passing strip of an impregnated base wherein the surface of the strip is in contact with the rotating printing roller, the bottom part of which is immersed in liquid adhesive mass and on its surface has a system of parallel regularly placed grooves transversal to the axis, which cover part of the circumference of the printing roller, the surface of which, above the liquid mass level, is in contact with the comb-shaped scraper provided with a set of teeth fitting into the grooves on the surface of the printing roller, wherein the comb-shaped scraper, every specific number of printing roller rotations, is totally moved away from the surface of the printing roller for the duration of angular shift and contact with the bottom felt surface of the part of the printing roller surface without any grooves, wherein the bottom surface of the felt strip is coated in a known manner with a protective plastic foil and then cut into sections, each of which has at least a single transversal strip of an adhesive mass.

To enable precise cutting of the felt strip into sections, after the previously removed scraper is again pushed against the surface of the printing roll, the position of the transversal strip of an adhesive layer is marked with points, and following the movement of the felt strip on the line the cutting knife is activated by a sensor.

The present invention refers also to the device for producing sections of weldable roof felt, having on one side an adhesive layer in the form of at least a single longitudinal strip and a transversal strip of an adhesive material.

The device according to the invention having an assembly for feeding the strip of saturated and/or coated base strip, a roll system for feeding the protective foil and a transversal cut-off knife and a roll for receiving finished felt sections, has a tank of liquid adhesive mass, where a printing roller is immersed, having on its surface a series of transversal evenly placed grooves covering part of the circumference of the printing roll, , , and the surface of the rotating printing roller, above the liquid mass level is in contact with the periodically removed comb-shaped scraper, the movement of which depends on the number of rotations of the printing roller.

The width of grooves covering part of the circumference of the printing roll corresponds to a distance between specific longitudinal strips of adhesive bituminous layer on the weldable roof felt, and the width of the part of the roll surface without the grooves corresponds to the width of the transversal strip of adhesive mass laid on the weldable roof felt strip,

While producing a section of roof felt with several parallel longitudinal strips of an adhesive material and provided with an edge longitudinal wider strip of an adhesive material, the printing roller on one of its sides has the smooth section of the surface adjacent to the edge of the base, the width of which corresponds to the width of the longitudinal edge strip of an adhesive mass layer.

To obtain felt rolls having at the end this transversal strip of bituminous mass level, the comb-shaped scraper is connected with the control system comprising the counter of the printing roller revolutions.

To have a labyrinth-shaped ventilation system or transversal ducts in the produced roof felt, the surface of the outer peripheral protrusions in the printing roller has transversal incisions that combine neighboring grooves.

It is favorable when the diameter of the protrusions located on the printing roller which print out the wide and smooth transversal strip is lower than the diameter of the peripheral protrusions printing the pattern and at the same time than the diameter of the ring printing the smooth and wide transversal strip by 0.5 mm to 5,0 mm. It prevents the application of small quantities of bituminous mass on the strip in between the planned areas for printing the wide and smooth transversal strip. Even though the scraper removes almost all the adhesive mass from the surface which prints the wide and smooth transversal strip, its small quantity is still left on the surface. Reduction in the diameter of the protrusions intended for printing of the wide and smooth transversal strip against the other diameters of the printing roller makes this small quantity of bituminous mass stay away from the bottom surface of the felt and not remain on its surface. Therefore, simultaneous cooperation of the scraper and the printing roller and the difference in the diameters of relevant sections of the printing roller guarantee the printing of the wide and smooth transversal strip in the planned areas and secure the bottom surface of the felt against getting smeared with the adhesive layer between the areas planned for the printing of the wide and smooth transversal strip.

In order to improve the durability of the device according to the invention, the comb-shaped scraper is made of the material characterized by lower hardness than the hardness of the printing roller material. It is favorable if the comb-shaped scraper is made of brass, and the printing roller is made of tool steel.

The device according to the invention, right after the roller feeding the protective foil to the bottom surface of the felt strip, is provided with the marking element for indication of the position of the transversal strip of the adhesive mass combined with the comb-shaped scraper system, as well as the sensor of the indications, which controls the transversal cut-off knife.

The method according to the invention makes it possible to make, at the same time, the longitudinal ventilation strips of the adhesive mass layer, and the side wide and longitudinal lap strip along one of the sides, with simultaneous application of the transversal lap strip on a periodic basis.

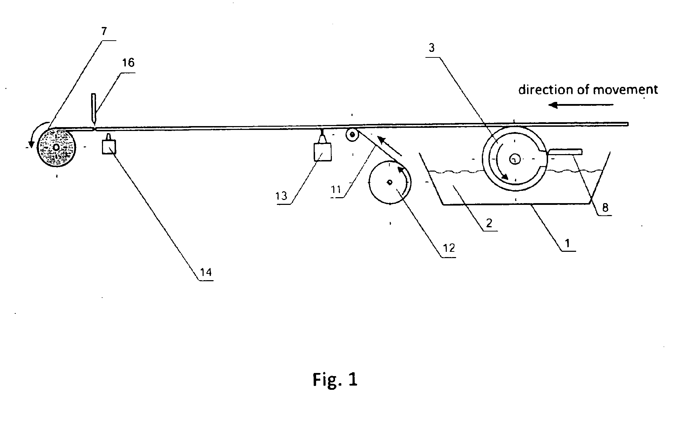

The device according to the invention is shown as an embodiment in the enclosed drawing, where
Fig. 1 shows the schematic side view of the device according to the invention;

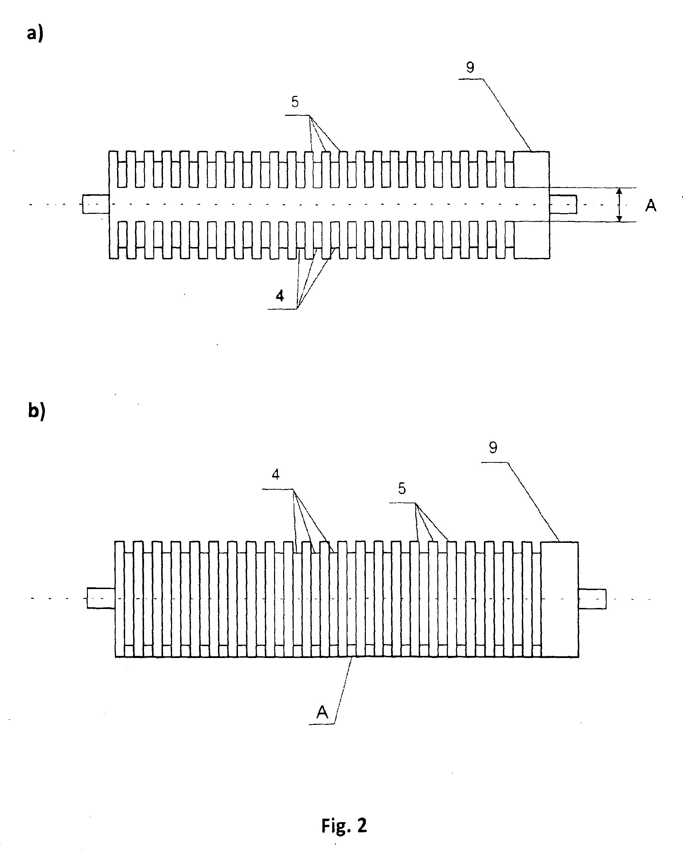

Fig. 2 shows the printing roller - a) side view and b) top view;

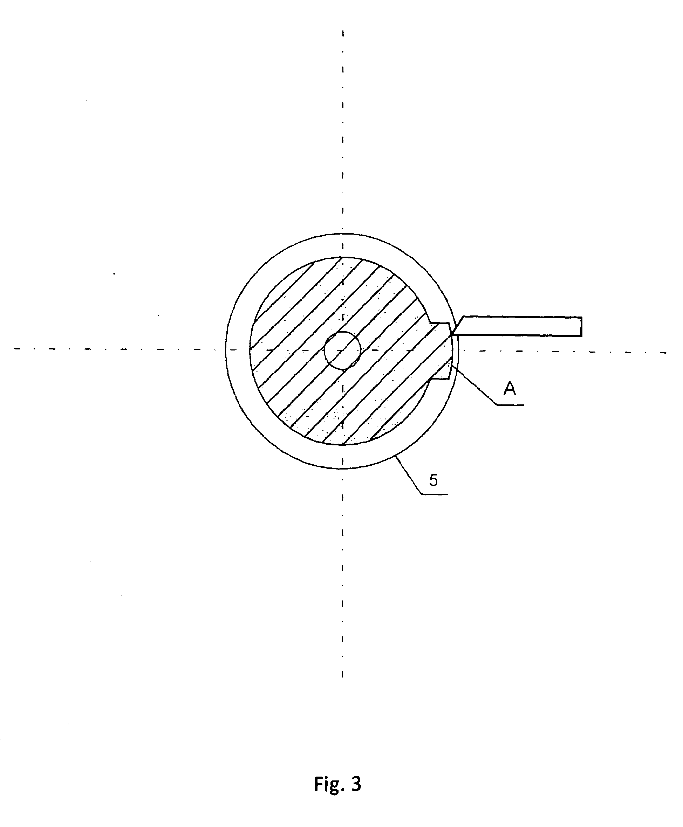

Fig. 3 shows the cross-section of the printing roller with the comb-shaped scraper pushed against it;

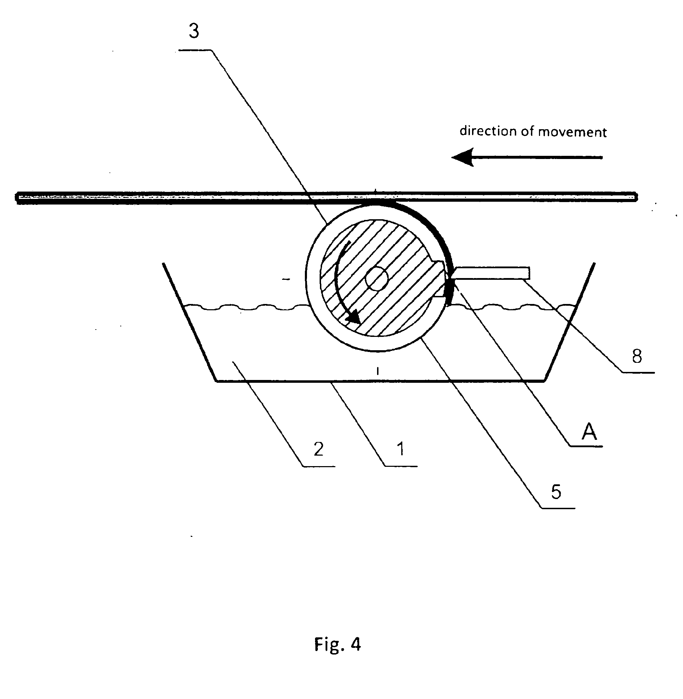

Fig. 4 shows the side view of the printing assembly with the pressed-against comb-shaped scraper while applying longitudinal strips of an adhesive layer;

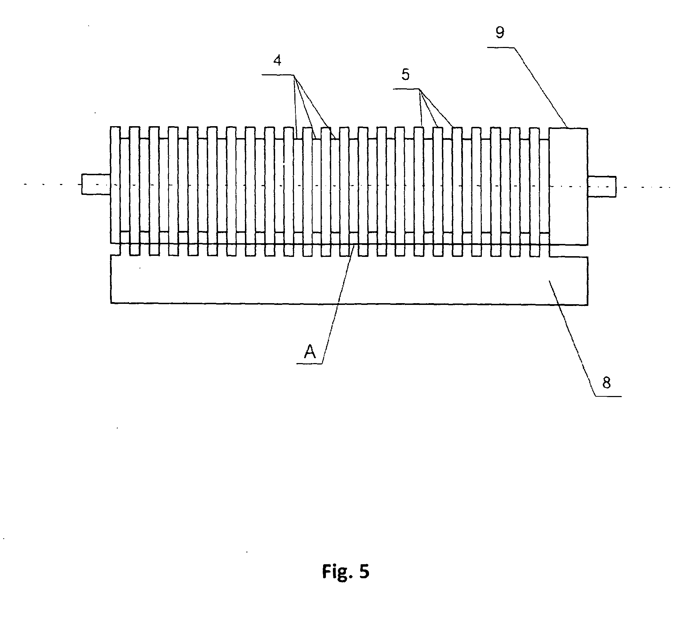

Fig. 5 shows the top view of the printing roller with the pressed-against comb-shaped scraper while applying longitudinal strips of an adhesive layer;

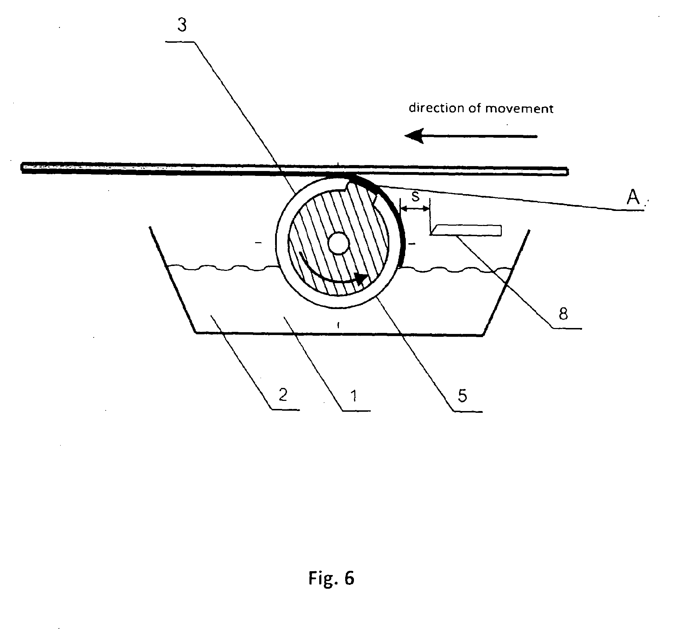

Fig. 6 shows the side view of the printing assembly with the removed comb-shaped scraper while applying a transversal strip of an adhesive mass layer;

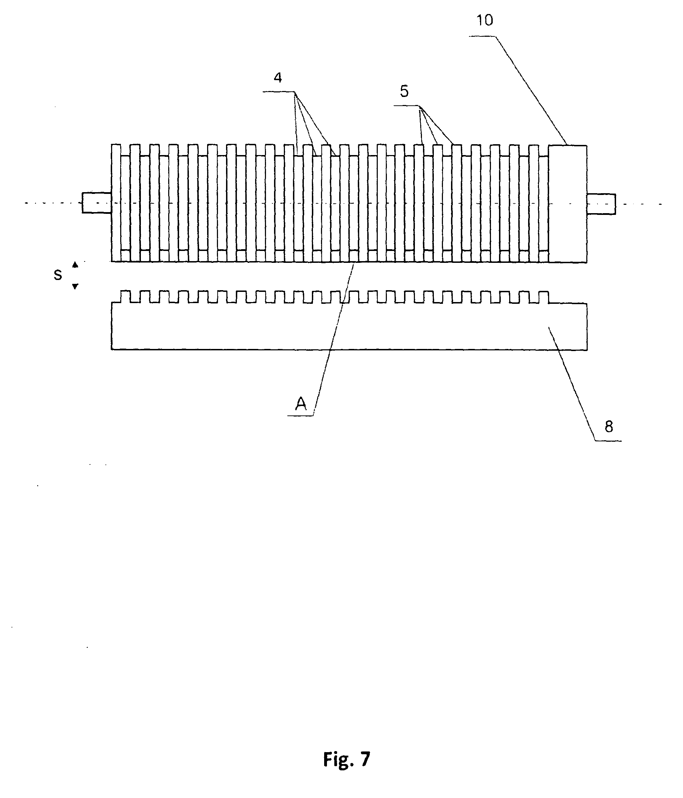

Fig. 7 shows the top view of the printing roller with the removed comb-shaped scraper while applying a transversal strip of a bituminous mass layer;

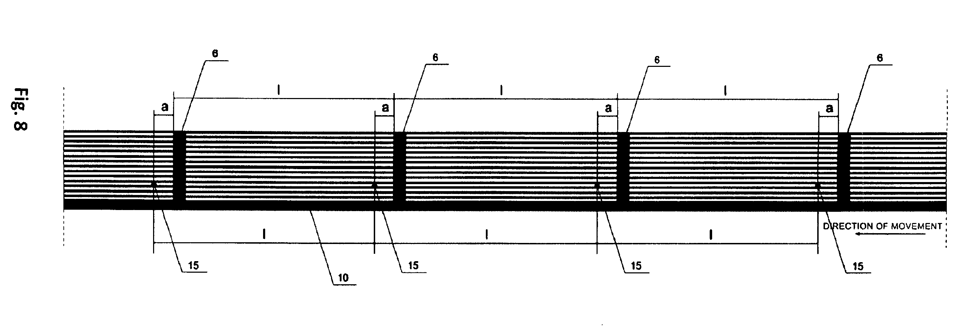

Fig. 8 shows the bottom view of the felt strip section with the marks applied by the marking device - before the cutting operation;

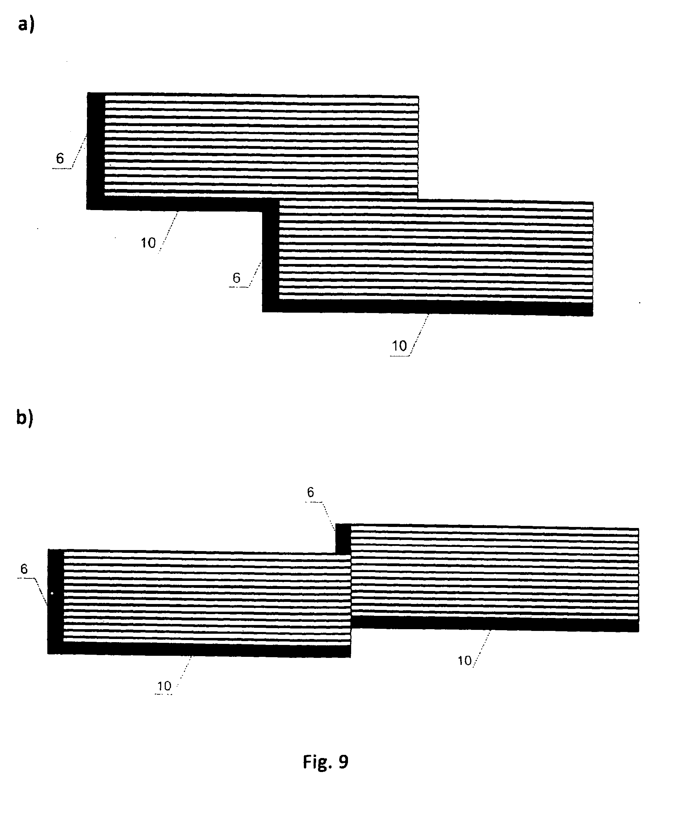

Fig. 9 shows the felt sections with transversal strips and a longitudinal strip of an adhesive mass layer joined with a) a longitudinal lap and b) a transversal lap.

The device according to the invention is provided with a base strip unreeling assembly, base strip bitumen saturation/coating assembly comprising a tank filled in with a liquid mixture and transport and tension rolls, slot pass for calibration of the base coating by pulling the bitumen coated base through the gap in order to obtain the planned thickness, stand for application of finish on the top surface, stand for coating the bottom surface with an intermediate layer in the form of an additional coating or a special type of fine-grain grit or talc and a printing assembly. The printing assembly comprises a tank **1** for liquid adhesive mass **2,** in which a printing roller **3** is immersed. The printing roller **3** is provided with regularly arranged parallel grooves **4** transversal to its axis, which cover part of the circumference of the printing roller **3.** The width of these grooves **4** corresponds to the distance between respective ventilation longitudinal strips **5** of a bituminous mass layer **2** on a surface of the roof felt produced with a method according to the invention, wherein the width of the part of the surface of the printing roller **3** without the grooves **4** corresponds to the width of the transversal strip **6** of the adhesive mass strip **2** applied on the strip of felt **7.** The surface of the rotating printing roller **3,** when above the level of liquid bituminous mass **2** is in contact with the slideably-mounted comb-shaped scraper **8,** whose movement depends on the number of rotations of the printing roller **3.**

During the rotation of the printing roller **3,** the comb-shaped scraper **8** immersed in liquid adhesive mass **2** is in contact with part **A** of the outer side surface of the printing roller **3** without the peripheral grooves, the purpose of which is to print the wide and smooth transversal strip **6,** and it removes (selectively and strip by strip) bituminous mass only from this part **A** of the surface making it possible to apply bituminous mass **2** in continuous regular and parallel strips during all the rotations of the printing roller **3,** except for every n^{th} rotation of the roller **3,** when the comb-shaped scraper **8** is removed from the outer surface of the roller **3,** on which the wide and smooth transversal strip **6** is to be printed, by the distance s greater than the thickness of the adhesive mass layer **2.** After the removal of the rake **8** the bituminous mass **2** remains on the entire part **A** of the surface of the printing roller **3,** and therefore it can be applied on the bottom surface of the felt **7** forming there a wide and smooth continuous transversal strip **6** of the adhesive bituminous mass **2.** The printing roller **3** is provided with a peripheral smooth ring **9** which from one side is adjacent to the edge of the side surface, said ring applying the longitudinal edge strip **10** of the adhesive mass layer onto the felt **7.**

Thanks to such interaction of the printing roller **3** and the comb-shaped scraper **8** the bottom surface of the felt **6** is printed continuously during all the rotations of the roller **3** with the linear pattern and the longitudinal edge strip **10** and, furthermore, every specific n^{th} rotation of the roller **3,** the transversal strip **6** is printed.

The outer diameter of the side peripheral protrusions on the printing roller (**3**) is greater by 1.2 mm than the outer diameter of the other protrusions on the roller **(3).**

In the device according to the invention, the comb-shaped scraper **8,** when in contact with the printing roller **3,** removes the adhesive bituminous mass **2** only from part A of the outer surface of the printing roller **3,** which is used for printing the wide and smooth transversal strip **6,** yet during neither rotation does it remove the adhesive mass **2** from the other parts of the outer surface of the printing roller **3.** The bottom surface of the felt strip **7** with a convex imprint of longitudinal ventilation strips **5,** longitudinal edge strip **10** and transversal strips **6** is covered with anti-adhesive plastic foil **11** which is unreeled from the roll **12** and then pressed with the pinch roll.

Then, the protective foil **11** covering the bottom surface of the felt strip **7** is marked with a point indicator **13** at the distance **a** from the edge of the transversal strip **6** on the spot with the transversal strip **6** of the bituminous mass **2.** The felt strip **7** marked this way is directed over the optic sensor **14,** which detects the earlier point marks **15** and sends a signal to the electronic system which activates the transversal knife **16,** which cuts off a section of the felt strip **7.** The felt strip **7** is reeled on the roll using a known method and then transferred for packaging. The cutting off of the felt strip **6** section may be done before or after the transversal strip **5** of the adhesive mass layer **2,** depending on whether the felt roll should have such a transversal strip **5** at the beginning or end of its length.

To make transversal gaps in the parallel ventilation strips **5,** the printing roller **3** is used, which on its side surface is provided with cross-wise incisions. The transversal gaps in the strips **5** of the adhesive layer improve ventilation and removal of moisture from the surfaces of the roofs covered with the felt produced by the method according to the invention.

A base for the felt **7** is usually a glass fiber blanket of a grammage of 50 to 160 g/1m², polyester fiber cloth of a grammage of 120 to 300 g/1 m², glass fabric of a grammage of 150 to 200 g/1 m² and composites of said types of materials.

The adhesive mass **2** scan be for instance bituminous mass which is the mixture of:
- bitumen of a penetration at 25 °C of 25 to 50 1/10mm and a softening point of 80 to 110 °C and a filler in the form of limestone powder with CaCO₃ content of at least 85 % and grain size below 1 mm, basalt powder of absorbability below 1.5 % m/m, dolomite powder of moisture content below 0.3 % m/m or another filler, wherein the quantity of the filler is at least equal to the quantity of bitumen and ranges from 50% to 75 % by weight of total mixture,
   or
- bitumen of a penetration at 25 °C from 160 to 220 1/10 mm and a softening point from 30 to 50 °C, a modifier in the form of synthetic rubber or atactic polypropylene in the quantity of 3% to 12% for rubber, and 6% to 10% for polypropylene, and a filler in the form limestone powder of CaCO₃ content of at least 85 % and grain size below 1mm, basalt powder of absorbability below 1.5 % m/m, dolomite powder of moisture content below 0.3 % m/m, or another filler, wherein the filler quantity is from 55 to 70 % of total mixture.

The protective foil can be for example anti-adhesive polyethylene foil or polypropylene foil, favorably of a grammage of 0.90 to 0.97 gr/cm².

The bottom surface of the felt **7,** produced using the method according to the invention by the device according to the invention, having a layer of bituminous mass **2** on the bottom surface in the form of a row of parallel ventilation strips **5,** longitudinal edge strip **10** and a wide and smooth transversal strip **6** makes it possible to make tight and durable roofing quickly by using longitudinal laps and transversal laps of the neighboring felt strips **7** which are joined together. In the place of the wide and smooth transversal strip **6** there is sufficient amount of the adhesive mass **2,** which enables effective and durable connection of neighboring felt strips **7** and which guarantees high tightness of the roofing.

## Claims

1. Method of producing sections of weldable roof felt having an adhesive layer on one side in the form of at least one longitudinal strip and a transversal strip of an adhesive material, comprising operations of saturating and/or coating a base with a waterproof mass, applying mineral grit from the top and possibly from the bottom, covering the bottom surface of the obtained felt with a protective layer and cutting to sections, **characterized in that** an adhesive mass layer (**2**) is applied onto the bottom surface of the passing impregnated base strip, wherein said strip is in contact with the surface of a rotating printing roller (**3**), the bottom part of which is immersed in a liquid adhesive mass (**2**) and on its surface has a system of parallel regularly placed grooves (**4**) covering part of the circumference of the printing roller **(3)** and a forming part **(A)** of its surface in the form of a rectangular smooth field of a width corresponding to the width of a transversal strip (**6**) of the adhesive mass **(2)** layer, wherein the surface of the roller, above the liquid mass **(2)** level, is in contact with a comb-shaped scraper **(8)** provided with a set of teeth fitting into the grooves **(4)** on the surface of the printing roller **(3),** wherein the comb-shaped scraper **(8),** every specific number of printing roller rotations, is totally moved away from the surface of the printing roller (**3**) for the duration of angular shift and contact with a bottom felt (**7**) surface of the part of the printing roller surface without any grooves **(4),** wherein the bottom surface of the felt **(7)** strip is coated in a known manner with a protective plastic foil **(11)** and then cut into sections, each of which has at least a single transversal strip (**6**) of an adhesive mass..

2. Method according to claim 1, **characterized in that** after the previously removed comb-shaped scraper **(8)** is again pressed against the surface of the printing roller (**3**) the bottom surface of the felt **(7)** strip is provided with a mark (**15**) indicating the position of a transversal strip **(6)** of the adhesive mass **(2),** and following the passage of the felt (**7**) strip a cut-off knife **(16)** is activated by a sensor **(14).**

3. Device for producing weldable roof felt sections, having on one side an adhesive layer in the form of at least a single longitudinal strip and a transversal strip of an adhesive material, having an assembly for feeding the strip of saturated and/or coated base strip, a roll system for feeding the protective foil and a transversal cut-off knife and a roll for receiving finished felt sections, **characterized in that** it comprises a tank **(1)** of bituminous adhesive mass **(2),** where a printing roller (**3**) is immersed, having on its surface a row of parallel evenly placed grooves **(4)** transversal to its axis, covering part of the circumference of the printing roller (**3**), a forming part **(A)** of the side surface of the roller (**3**) having the form of a rectangular smooth field without any grooves (**4**), and the surface of the rotating printing roller (**3**) over the liquid adhesive mass **(2)** level is in contact with a periodically removed comb-shaped scraper **(8),** the movement of which depends on the number of printing roller **(3)** rotations.

4. Device according to claim 3, **characterized in that** the printing roller **(3)** on one of its sides has a smooth surface ring **(9)** adjacent to the edge.

5. Device according to claim 3, **characterized in that** the outer surface of peripheral protrusions of the printing roller **(3)** has transversal incisions that connect neighboring grooves **(4).**

6. Device according to claim 3, **characterized in that** the outer diameter of end peripheral protrusions of the printing roller (**3**) is slightly larger than the outer diameter of the other protrusions of the roller **(3),** favorably by 0.5 -5.0 mm.

7. Device according to claim 3, **characterized in that** a comb-shaped scraper **(8)** is made of a material **characterized by** lower hardness than the printing roller **(3)** material.

8. Device according to claim 3 or claim7, **characterized in that** the comb-shaped scraper **(8)** is made of brass, and the printing roller **(3)** is made of tool steel.

9. Device according to claim 3, **characterized in that** the comb-shaped scraper **(8)** is connected with a control system comprising a counter of printing roller **(3)** revolutions.

10. Device according to claim 3, **characterized in that** after a roll (**12**) feeding protective foil **(11)** to the bottom surface of the felt **(7)** strip it has a marking device **(13)** for applying marks **(15)** indicating the position of the adhesive mass layer transversal strip (**6**) and a sensor **(14)** for reading the marks **(15)** coupled with the comb-shaped scraper system, which controls the movement of a transversal cut-off knife (**16**). layer transversal strip (**6**) and the sensor (**14**) for reading the marks (**15**) coupled with the comb-shaped scraper system, which controls the movement of the transversal cut-off knife **(16).**

## Patentansprüche

1. Verfahren zum Herstellen von Abschnitten der schweißbaren Dachpappe mit einer Klebeschicht auf der einen Seite in Form von mindestens einem Längsstreifen und einem Querstreifen aus Klebematerial, welches die Sättigung und/oder Beschichtung des Trägers mit einer wasserdichten Masse umfasst, Auftragen von oben und eventuell von unten einer mineralischen Streuschicht, Bedecken der unteren Fläche der Dachpappe mit einer Schutzschicht und Schneiden in Abschnitte, **dadurch gekennzeichnet, dass** die Klebemassenschicht (2) auf die untere Fläche des sich verschiebenden Streifens des imprägnierten Trägers aufgebracht wird, indem man dieses mit der Oberfläche der rotierenden Druckwalze **(3)** in Berührung bringt, welche von unten in flüssiger Klebemasse **(2)** eingetaucht wird und auf ihrer Oberfläche eine Reihe von gleichmäßig verteilten, quer zur Achse angeordneten, parallelen Nuten (**4**) hat, die einen Teil des Umfangs der Druckwalze **(3)** umfassen, welche auf der Oberfläche einen Teil **(A)** in Form eines rechteckigen glatten Bereichs mit einer Breite gleich der Breite des Querstreifens (**6**) der Klebemasse (**2**) bilden, dessen Oberfläche sich oberhalb der flüssigen Klebemasse **(2)** mit dem kammförmigen Abstreifer (**8**) berührt, welcher mit einem Satz Zähne passend zu den Nuten (**4**) auf der Oberfläche der Druckwalze **(3)** ausgerüstet ist, wobei der kammförmige Abstreifer (**8**), jede bestimmte Anzahl von Umdrehungen der Druckwalze **(3)** vollständig von der Oberfläche der Druckwalze **)3),** für die Dauer der Winkelverschiebung und des Kontaktes der unteren Oberfläche der Dachpappe (**7**) mit dem Teil der Oberfläche der Druckwalze ohne Nuten (**4**) weggeschoben wird, danach wird die untere Oberfläche des Pappenstreifens (**7**) auf bekannte Weise mit einer Schutzfolie **(11)** aus Kunststoff überzogen und anschließend in Abschnitte geschnitten, von denen jeder mindestens einen Querstreifen (**6**) aus Klebematerial hat.

2. Verfahren nach Anspruch 1, **dadurch gekennzeichnet, dass** nach dem erneuten Andrücken des zuvor entfernten kammförmigen Abstreifers (**8**) auf die Oberfläche der Druckwalze **(3)** auf der unteren Oberfläche des Pappenstreifens (**7**) eine Markierung (**15**) der Lage des Querstreifens (**6**) der Klebemasse **(2)** erfolgt, welche nach dem Verschieben des Pappenstreifens (**7**) mittels eines Sensors (**14**) das Schneidmesser (**16**) aktiviert.

3. Vorrichtung zur Herstellung von schweißbaren Dachpappenabschnitten, welche auf einer Seite eine Klebeschicht in Form von mindestens einem Längsstreifen und einem Querstreifen aus Klebematerial haben, ausgerüstet mit einer Einheit zur Zuführung des gesättigten und/oder beschichteten Trägerbandes, das Walzensystem zum Zuführen der Schutzfolie und das quer angeordnete Schneidmesser und eine Rolle zur Aufnahme der fertigen Pappenabschnitte, **dadurch gekennzeichnet, dass** sie einen Behälter **(1)** für die flüssige Klebemasse **(2)** hat, in welchem die Druckwalze **(3)** eingetaucht wird, die auf ihrer Oberfläche eine Reihe von gleichmäßig verteilten, quer zur Achse angeordneten, parallelen Nuten (**4**) hat, die einen Teil des Umfangs der Druckwalze (**3**) umfassen, deren Einzelbreite gleich den Abständen zwischen den entsprechenden Längsstreifen (**5**) zur Lüftung der Klebeschicht, welche auf der Seitenfläche der Walze den Teil **(A)** in Form eines rechteckigen glatten Bereichs ohne Nuten (**4**) mit einer Breite gleich der Breite des Querstreifens (**6**) der Klebemasse (**2**) bilden, der auf den Pappenstreifen (**7**) aufgetragen wird, die Oberfläche der rotierenden Druckwalze **(3)** dagegen berührt sich oberhalb der flüssigen Klebemasse **(2)** mit dem in regelmäßigen Zeitabständen weggeschobenen kammförmigen Abstreifer (**8**) berührt, dessen Verschiebung von der Anzahl der Umdrehungen der Druckwalze **(3)** abhängt.

4. Vorrichtung nach Anspruch 3, **dadurch gekennzeichnet, dass** die Druckwalze **(3)** auf einer Seite auf der Oberfläche des Mantels einen an die Kante anliegenden glatten Oberflächenring (**9**) hat, dessen Breite gleich der Breite des äußersten Längsstreifens (**10**) der Klebemassenschicht ist.

5. Vorrichtung nach Anspruch 3, **dadurch gekennzeichnet, dass** die Außenfläche der peripheren Vorsprünge der Druckwalze **(3)** quer angeordnete Einschnitte hat, welche die benachbarten Nuten (**4**) verbinden.

6. Vorrichtung nach Anspruch 3, **dadurch gekennzeichnet, dass** der Außendurchmesser der äußersten peripheren Vorsprünge der Druckwalze **(3)** etwas größer ist als der Außendurchmesser der anderen Vorsprünge der Walze (**3**), vorteilhaft um 0,5 -5.0 mm.

7. Vorrichtung nach Anspruch 3, **dadurch gekennzeichnet, dass** der kammförmige Abstreifer (**8**) aus einem Material mit einer geringeren Härte als das Material der Druckwalze **(3)** hergestellt wurde.

8. Vorrichtung nach Anspruch 3 oder Anspruch 7, **dadurch gekennzeichnet, dass** der kammförmige Abstreifer (**8**) aus Messing, und die Druckwalze **(3)** aus Werkzeugstahl gefertigt sind.

9. Vorrichtung nach Anspruch 3, **dadurch gekennzeichnet, dass** der kammförmige Abstreifer (**8**) mit einem Steuerungssystem verbunden ist, welches mit einem Zähler der Umdrehungen der auftragenden Walze **(3)** ausgestattet ist.

10. Vorrichtung nach Anspruch 3, **dadurch gekennzeichnet, dass** sie hinter der Rolle (12) zur Zuführung der Schutzfolie (**11**) auf die untere Fläche des Pappenstreifens (**7**) eine mit dem kammförmigen Abstreifer (**8**) gekoppelte Markierungsvorrichtung (**13**) für die Markierungen (**15**) der Position des Querstreifens (**6**) der Klebemassenschicht und einen Sensor (**14**) für diese Markierungen (**15**) hat, welcher die Bewegungen des quer angeordneten Schneidemessers (**16**) steuert.

## Revendications

1. La méthode de la production des tranches de carton *[pour toitures]* soudable, ayant d'un côté une couche adhésive sous forme d'au moins une membrure longitudinale et une membrure transversale de tissu adhésif, contenant l'opération de la saturation et / ou de la couverture du porteur par la couche hydroisolante, l'application d'en haut et éventuellement d'en bas de paillettes minérales, la couverture de la surface inférieure du carton obtenu par la chape d'isolation et le découpage en sections **caractérisée en ce que** la couche de la pâte adhésive (**2**) est appliqué sur la surface inférieure de la bande en déplacement du porteur imprégné par son contact avec la surface du cylindre imprimant en rotation (**3**), qui par le bas est immergé dans la pâte adhésive liquide (**2**) et possède sur sa surface une série de rainures parallèles (**4**) transversales par rapport à l'axe, réparties uniformément, entourant une partie du périmètre du cylindre imprimant **(3)** et constituant sur sa surface une partie **(A)** sous forme de champ rectangulaire lisse de largeur égale à la largeur de la bande transversale (**6**) de la couche de pâte adhésive **(2),** et la surface duquel entre en contact, au dessus du niveau de la pâte adhésive liquide **(2)**, avec le racloir du type peigne (**8**), muni d'une série de dentures adaptées aux rainures **(4)** sur la surface du cylindre imprimant **(3)**, en plus le racloir du type peigne **(8)**, après un nombre bien défini de rotations du cylindre imprimant **(3)**, est dégagé entièrement de la surface du cylindre imprimant **(3)** pour la durée du mouvement angulaire et du contact avec la surface inférieure du carton **(7)** de la partie de la surface du cylindre imprimant dépourvue de rainures **(4)**, après quoi on recouvre la surface inférieure de la bande du carton **(7)**, de manière connue, avec la pellicule **(11)** de matière plastique de protection, et ensuite on coupe en sections, dont chacune possède au moins une membrure transversale **(6)** de la couche adhésive.

2. La méthode selon la revendication 1, **caractérisée en ce qu**'après avoir poussé de nouveau le cylindre imprimant **(3)** vers la surface, le racloir du type peigne **(8)** précédemment dégagé, sur la surface inférieure de la bande de carton (**7**) on effectue le marquage **(15)** de la position de la membrure transversale **(6)** de la pâte adhésive **(2),** qui au fur et à mesure du déplacement de la bande de carton (**7**) sur la ligne de fabrication, par l'intermédiaire du lecteur **(14)**, met en service l'outil (**16**) de coupe.

3. Le dispositif pour la fabrication des tranches de carton soudable, possédant d'un côté une couche adhésive sous forme d'au moins d'une membrure longitudinale et une membrure transversale de tissu adhésif, possédant un ensemble d'alimentation de la bande du porteur saturé et / ou couvert, un système de rouleau d'alimentation de l'enduit protecteur ainsi que l'outil de coupe transversal et le rouleau de la réception des sections de carton déjà prêtes **caractérisé en ce qu**'il possède un réservoir **(1)** de pâte adhésive liquide **(2),** dans lequel est immergé le cylindre imprimant **(3)**, possédant sur sa surface une série de rainures **(4)** parallèles transversales par rapport à l'axe, réparties uniformément, entourant une partie du périmètre du cylindre imprimant **(3)**, dont la largeur simple est égale aux écartements entre les membrures longitudinales d'aérage appropriées **(5)** de la couche adhésive, constituant sur la surface latérale du cylindre **(3)** une partie **(A)** sous forme du champ rectangulaire, lisse, dépourvu de rainures **(4)** de largeur égale à la largeur de la membrure transversale **(6)** de la couche adhésive **(2)** superposé sur la bande du carton **(7)**, par contre la surface du cylindre imprimant **(3)** en rotation entre en contact au-dessus du niveau de la pâte adhésive liquide **(2)** avec le racloir du type peigne **(8)** détaché périodiquement, dont le déplacement dépend du nombre de rotations du cylindre imprimant **(3)**.

4. Le dispositif selon la revendication 3, **caractérisé en ce que** le cylindre imprimant **(3)** d'un côté possède, sur la surface de la calandre, un collier lisse superficiel **(9)** adjacent vers la face, dont la largeur est égale à la largeur de la membrure longitudinale superlative **(10)** de la couche de la pâte adhésive **(2)**.

5. Le dispositif selon la revendication 3, **caractérisé en ce que** la surface extérieure des ergots périphériques du cylindre imprimant **(3)** possède des encoches transversales assemblant les rainures adjacentes **(4)**.

6. Le dispositif selon la revendication 3, **caractérisé en ce que** le diamètre extérieur des ergots superlatifs périphériques du cylindre imprimant **(3)** est légèrement plus grand que le diamètre extérieur d'autres ergots du cylindre **(3)**, favorabolement de 0,5 - 5,0 mm.

7. Le dispositif selon la revendication 3, **caractérisé en ce que** le racloir du type peigne **(8)** est fait en matériau dont la dureté est inférieure à celle du cylindre imprimant **(3)**.

8. Le dispositif selon la revendication 3 ou la revendication 7, **caractérisé en ce que** le racloir du type peigne (**8**) est fait en cuivre jaune et le cylindre imprimant **(3)** est fait en acier à outils.

9. Le dispositif selon la revendication 3, **caractérisé en ce que** le racloir du type peigne (**8**) est raccordé au système de guidage, embrassant le compteur de tours du cylindre imprimant **(3)**.

10. Le dispositif selon la revendication 3, **caractérisé en ce qu**'il possède derrière la bobine **(12)** distribuante l'enduit protecteur **(11)** sur la surface inférieure de la bande du carton **(7)** accouplé au système du racloir du type peigne (**8**) le marqueur **(13)** de pointages (**15**) de la position de la membrure transversale (**6**) de la couche de pâte adhésive ainsi que le détecteur (**14**) de ces pointages **(15)**, qui commande les mouvements de l'outil de coupe transversal **(16)**.
